# EUROPÄISCHE PATENTSCHRIFT

(11) **EP 3 969 281 B1**
(45) Veröffentlichungstag und Bekanntmachung des Hinweises auf die Patenterteilung: **28.08.2024**
(21) Anmeldenummer: 20726359.1
(22) Anmeldetag: 13.05.2020
(51) Int. Cl.: B32B 38/18, B31D 3/02, B32B 3/12

(54) **VERFAHREN ZUR HERSTELLUNG EINES FLEXIBEL FORMBAREN WABENKERNS UND VORRICHTUNG ZUR DURCHFÜHRUNG DES VERFAHRENS**
METHOD FOR PRODUCING A HONEYCOMB CORE THAT CAN BE FLEXIBLY SHAPED AND DEVICE FOR CARRYING OUT SAID METHOD
PROCÉDÉ DE FABRICATION D'UN NOYAU ALVÉOLAIRE FAÇONNABLE DE FAÇON FLEXIBLE ET DISPOSITIF DE MISE EN OEUVRE DU PROCÉDÉ

(30) Priorität: 17.05.2019 DE 102019113067
(43) Veröffentlichungstag der Anmeldung: 23.03.2022
(73) Patentinhaber: Technische Universität Dresden, 01069 Dresden (DE)
(72) Erfinder: LIPPITSCH, Stefan, 01069 Dresden (DE); KORN, Christian, 01069 Dresden (DE); WAGENFÜHR, André, 01069 Dresden (DE)
(74) Vertreter: Kailuweit & Uhlemann Patentanwälte Partnerschaft mbB
(86) Internationale Anmeldenummer: PCT/EP2020/063319
(87) Internationale Veröffentlichungsnummer: WO 2020/234083

(56) Entgegenhaltungen:
- DE-A1- 19 830 380
- US-A- 2 674 295
- US-A- 5 431 980
- US-A1- 2014 004 299
- "HexWeb (TM) Honeycomb Attributes and Properties", 30 November 1999 (1999-11-30), XP055220698, Retrieved from the Internet <URL:http://www.hexcel.com/Resources/DataSheets/Brochure-Data-Sheets/Honeycomb_Attributes_and_Properties.pdf> [retrieved on 20151014]

## Beschreibung

Die Erfindung betrifft ein Verfahren zur Herstellung eines flexibel formbaren Wabenkerns sowie eine Vorrichtung zur Durchführung des Verfahrens. Insbesondere werden ein Verfahren und eine Vorrichtung zur Umformung eines herkömmlichen Hexagonalwabenkerns zu einem flexibel formbaren Wabenkern sowie, jedoch außerhalb des Schutzumfangs der Ansprüche, die Verwendung eines mit dem Verfahren hergestellten flexibel formbaren Wabenkerns offenbart.

Plattenförmige Sandwichverbunde bestehen meist aus zwei Deckschichten, welche schubfest mit einer Kernlage geringer Dichte verbunden sind. Ausgehend von diesem Aufbau resultieren vorteilhafte mechanischen Eigenschaften bei vergleichsweise geringer Masse des Verbundes.

Eine häufig vorzufindende Variante derartiger Kernlagen sind Hexagonalwabenkerne, deren Struktur Bienenwaben ähnelt. Durch diese Geometrie, samt den dazwischenliegenden Hohlräumen, entstehen sehr leichte und dennoch schub- und druckfeste Kernlagen, wodurch wesentliche Anforderungen an den Kern im Sandwichverbund erfüllt werden. Die geometrische Ausprägung einer Wabenstruktur wird als Zellstruktur bzw. Zellgeometrie bezeichnet. Erstmals wurde eine solche Zellstruktur in der Offenlegungsschrift DE 133 165 A beschrieben.

Unter einem Hexagonalwabenkern ist ein vorgefertigter Wabenkern zu verstehen, der eine regelmäßige, zumeist hexagonale Zellstruktur aufweist. Eine hexagonale Zelle wird durch sechs Stege begrenzt.

Insbesondere handelt es sich bei den sechs Stegen, aufgrund der üblicherweise durch die Herstellung von bekannten Hexagonalwabenkernen teilbereichsweise verklebten Materialstreifen, um vier Einzelstege, also Stege mit einer einfachen Materialschicht, und zwei Doppelstege, also Stege mit einer doppelten, durch die Verklebung entstandenen Materialschicht. Unter den Schmalseiten der Wabenkern-Stege werden im Folgenden die Kanten der Zellwände (Stege) des Wabenkerns verstanden, die in Kontakt mit den Decklagen des späteren Sandwichverbundes sind.

Für den Bereich des mobilen und immobilen Innenausbaus sowie für artverwandte Anwendungen werden heute Hexagonalwabenkerne in unexpandierter Form, meist aus Papier, aber auch aus Aluminium und Kunststoff hergestellt. Die unexpandierten Wabenkerne bieten die Möglichkeit, erst unmittelbar vor der Weiterverarbeitung zum Sandwichverbund in die eigentliche Hexagonalform expandiert zu werden, was den Vorteil eines sehr geringen Transport- und Lagervolumens mit sich führt. Sandwichplatten mit solchen Kernen weisen neben einem geringen Rohstoffeinsatz sowie geringer Eigenmasse gute Druck-, Schub- und Biegefestigkeiten auf.

Ein kurzer Überblick über ein Herstellungsverfahren für Hexagonalwabenkerne sowie die dabei eingesetzten Materialien und resultierenden Eigenschaften ist der Veröffenlichung "HexWeb (TM) Honeycomb Attributes and Properties", 30. November 1 999 (1 999-11 -30), XP055220698, Gefunden im Internet: URL:http://www.hexcel.com/Resources/DataSheets/Brochure-Data-Sheets/Honeycomb_Attributes_and_Properties.pdf [gefunden am 2015-10-14] zu entnehmen

Die wabenartige Zellstruktur herkömmlicher Hexagonalwabenkerne kann durch das teilbereichsweise Fügen von Bahnen, Bögen oder Streifen der genannten Materialien, einem sich ggf. anschließenden Trennvorgang und dem abschließenden Auseinanderziehen, dem Expandieren, entstehen. Die elastische Rückverformung beim Expandieren des Papierwabenkerns wird durch eine im Expandiergerät zugleich stattfindende Trocknung weitestgehend unterdrückt. Die Expansionsrichtung entspricht üblicherweise der Maschinenlaufrichtung. Der Verfahrensschritt der Expansion wird beispielsweise im Gebrauchsmuster CN 2 512 594 Y beschrieben. Die Zellstruktur besteht aus Doppel- und Einzelstegen, wobei die Bereiche der Verklebung als Doppelstege und die nicht verklebten Bereiche als Einzelstege bezeichnet werden. Typischerweise hat eine Zelle eines Hexagonalwabenkerns zwei zueinander parallele Doppelstege und vier Einzelstege, die alle selbst wiederum Bestandteil benachbarter Zellen sind. Je nach Expansionsgrad, dem Grad, wie stark der Wabenkern auseinandergezogen wird, ergeben sich unterschiedlich ausgeprägte, hexagonale Zellen. Der zumeist erwünschte Expansionsgrad der Zellen ist dann erreicht, wenn die Innenwinkel der sechseckigen Zellstruktur gleich, demnach 120° sind. Sie können jedoch für spezielle Anwendungsfälle auch variiert werden. Ebenfalls können die einzelnen Steglängen verschieden ausgeführt sein, wie in den Druckschriften JP H09-207,253 A und US 4 500 583 B beschrieben. Ein weiteres Verfahren wird in der US 2,674,295 A beschrieben. Wird ein Hexagonalwabenkern geringfügiger expandiert als in den zuvor genannten Schriften, wird er als unterexpandiert und im entgegengesetzten Fall als überexpandiert bezeichnet. Die maximal überexpandierte Zellstruktur ähnelt einer Rechteckform.

Eines der produktivsten Verfahren zur Herstellung herkömmlicher Hexagonalwabenkerne wird beispielsweise in EP 0 765 220 A1 beschrieben. Durch die gleichzeitige Verarbeitung mehrerer Bahnen Papier zum Hexagonalwabenkern entsteht ein hochproduktives Verfahren und einhergehend ein kostengünstiges Produkt.

Die Art und Weise der Verklebung und Weiterverarbeitung kann jedoch auch auf andere Weise erfolgen. Dies ermöglicht dann andere Zellstrukturen, samt einhergehender abweichender Eigenschaften und Formen. So führen beispielsweise trapezförmige Klebeflächen, statt den sonst rechteckigen, beim Expandieren zu einer Krümmung des Wabenkerns. Exemplarische Beispiele hierfür werden in den Offenlegungsschriften JP H10- 156 983 A, JP H06- 99 530 A und US 3 178 335 A beschrieben. Auch kann die geometrische Gestaltung der Zellstruktur an spezielle Aufgaben angepasst werden. So kann der Klebstoff z.B. statt auf Streifen auch auf Kreisringe, wie es das Beispiel US 3 016 315 B zeigt, aufgetragen werden. In diesem Fall entstehen Wabenstrukturen mit einer hohlzylindrischen Form. Ein derartiges Beispiel zeigt die Offenlegungsschrift EP 2 581 215 A2.

Je nach verwendeten Materialien sind Wabenkerne aufgrund ihrer Zellstruktur in ihrer räumlichen Formbarkeit zumeist stark eingeschränkt. Bei der Herstellung zwei- und dreidimensional geformter Sandwichbauteile mit einem Wabenkern als Kernlage wird daher bislang häufig die Zerstörung der Zellstruktur in den Bereichen starker Umformung in Kauf genommen. Den resultierenden, verschlechterten Festigkeitseigenschaften wird z.B. durch partiell eingebrachte Schäume entgegnet, wodurch zumeist dennoch schlechtere Eigenschaften resultieren.

Aufgrund von vorwiegend elastischen Verformungen in den Einzelstegen kann mit einem herkömmlichen Hexagonalwabenkern höchstens die Formung um eine Achse bei entsprechend gro-ßem Biegeradius gelingen. Beispiele hierfür sind das Schutzrecht US 3 225 509 B und die Patentanmeldung US 2012 / 0 325 836 A1. Eine zweifache Krümmung mit zur Zellgeometrie verhältnismäßig kleinen Biegeradien führt zur Deformation bzw. partiellen Zerstörung des Kerns, wodurch seine erwünschten Eigenschaften im Sandwichverbund nachteilig beeinträchtigt sind.

Wabenkerne, die eine doppelte Krümmung ohne wesentliche Materialschädigung zulassen, werden flexibel formbare Wabenkerne genannt. Die aus dem Stand der Technik bekannten flexibel formbaren Wabenkerne weisen wiederkehrende konstruktive Merkmale auf, durch die die Formbarkeit im Vergleich zu herkömmlichen Hexagonalwabenkernen ermöglicht wird. Diese Merkmale sind:
- Schaffung von Dehn- und Stauchreserven, insbesondere durch Auflösen der Stegflächen in mehrere kleine, so dass Längenänderungen der Stege ermöglicht werden. Beispielsweise können durch das Einbringen von Rundungen, Knicken, Falzen, Perforationen oder Rillungen, je nach Ausführungsform, die Stege während einer Formung ohne Schädigung des Kerns gestreckt oder gestaucht werden.
- Nutzung von herstellungs-, expansions-, zellgeometrie- und materialbedingten Radien an den Übergangsstellen zwischen den Stegen. Bei einer Umformung des Kerns vergrößern sich diese auf der Druckseite, bzw. verkleinern sich auf der Zugseite.
- Nutzung kurzer Doppelstege, bzw. von Doppelstegen mit nicht durchgängiger Verklebung und ggf. zusätzlich eingebrachten Rilllinien oder Ausformungen, so dass auch die Doppelstege flexibel in ihrer Länge sind und auf Verformungen reagieren können.
- Verhindern, dass sich Materialspannungen über mehrere Zellen aufbauen, z.B. durch die Auflösung der Parallelität von Stegen oder auch die Auflösung von Knotenpunkten.
- Teilbereichsweises Verkleben der Doppelstege zur Gewinnung einer höheren Flexibilität.

Zellgeometrien flexibel formbarer Wabenkerne werden in einer ganzen Reihe von Patenten geschützt. Dem hingegen existieren nur wenige Patente, in denen auch Herstellungsverfahren angegeben werden.

Ein flexibel formbarer Wabenkern ist beispielsweise aus der Schrift EP 0 955 109 A2 bekannt. Er ist nicht expandierbar und wird somit von vornherein so gefertigt, wie er auch später zum Sandwich weiterverarbeitet wird. Die Formbarkeit wird erreicht, indem die Einzelstege herstellungsbedingt Verformungen gestatten. Sie sind vorgebogen, was einerseits das Knicken der Einzelstege und somit das Stauchen des Kerns erleichtert und andererseits Dehnreserven, zum Strecken der Einzelstege und somit des Kerns schafft.

Weitere Möglichkeiten zur Gestaltung flexibel formbarer Kerne sind in der Schrift US 5 431 980 A offenbart. Derartige Strukturen sind in ihrer Herstellung aufwändig und bieten zudem nicht die Möglichkeit eines Transportes im unexpandierten Zustand zum Weiterverarbeiter. Somit sind solche flexibel formbaren Wabenkerne kostenintensiv und werden nur für wenige spezielle Anwendungen verwendet. Einen nur sehr bedingt dreidimensional formbaren Wabenkern ohne nennenswerte Dehnreserven schlägt die US 2014 / 0 004 299 A1 vor, ohne jedoch ein geeignetes Herstellungsverfahren für industrielle Zwecke zu benennen.

Ein Verfahren zur Herstellung flexibel formbarer Wabenkerne ist aus der EP 2 991 822 B1 bekannt. Das Verfahren umfasst das Formen eines bogen- oder bahnförmigen Materials zu einem mäanderförmigen Gebilde. Anschließend wird in die vertikalen Flächen des Mäanders ein Zickzackmuster eingebracht. Abschließend werden Streifen vom so geformten Material zu einem flexibel formbaren, expandierbaren Wabenkern verklebt.

In JP 2000- 246 818 A wird ein Verfahren zur Herstellung eines - nur geringfügig formbaren Wabenkerns beschrieben, bei dem zuerst eine Wellenstruktur in das Kernmaterial eingebracht wird. Danach werden die Wellen teilweise mit Klebstoff beschichtet, geschlitzt, aufgerichtet und zu einem Kern aufgestaut.

Lediglich eine leichte Verbesserung der Formbarkeit wird durch das Einbringen von Rillen oder Prägungen in die Einzelstege eines sonst herkömmlichen Hexagonalwabenkerns, wie in der DE 10 2009 005 869 A1 beschrieben, erreicht, da zwar eine vereinfachte Stauchung der Einzelstege ermöglicht wird, jedoch so keine zusätzliche Dehnreserve geschaffen ist.

Die DE 198 30 380 A1 beschreibt ein Verfahren zur Herstellung eines Wabenkerns und die dazu genutzte Vorrichtung. Der Wabenkern wird durch Verschweißen vorgefertigter Streifen und anschließendes Expandieren erzeugt. Es handelt sich um einen gängigen Hexagonalwabenkern ohne besonderes Formungsvermögen.

Für die meisten aufgeführten Wabenkerne wird kein Herstellungsverfahren angegeben. Falls doch, sind sie mit einem hohen technologischen und technischen Aufwand verbunden. Resultierende Produkte sind daher kostenintensiv und finden bislang im Massenmarkt keine Anwendung. Zur größeren Verbreitung einfach- und doppeltgekrümmter Sandwichbauteile fehlt demnach ein einfaches, kostengünstiges Herstellungsverfahren.

Aufgabe der vorliegenden Erfindung ist es daher, ein Verfahren bereitzustellen, mit dem die Nachteile des Standes der Technik überwunden werden können und mit dem besonders kostengünstig und mit vergleichsweise geringer technischer Komplexität die Herstellung flexibel formbarer Wabenkerne ermöglicht wird. Es ist eine Vorrichtung anzugeben, die geeignet ist, das erfindungsgemäße Verfahren auszuführen. Weiterhin soll eine Verwendungsmöglichkeit für die erfindungsgemäß hergestellten Wabenkerne benannt werden.

Die Aufgabe wird gelöst durch ein Verfahren mit den Merkmalen des Anspruchs 1 sowie durch eine Vorrichtung mit den Merkmalen des Anspruchs 7. Weiterbildungen der Erfindung sind in Unteransprüchen angegeben.

Die erfindungsgemäße Lösung basiert darauf, Ausgangsmaterial mit einem vergleichsweise hohen Vorfertigungsgrad, beispielsweise herkömmliche Wabenkerne, bevorzugt Hexagonalwabenkerne, mit dem erfindungsgemäßen Verfahren nachträglich umzuformen, so dass mittels weniger, technologisch überschaubarer Verfahrensschritte flexibel formbare Wabenkerne resultieren.

Die erfindungsgemäße Verarbeitung der Wabenkerne erfolgt während des Durchlaufs durch eine Vorrichtung in eine Bewegungsrichtung (Maschinenlaufrichtung - MLR). Wabenkerne bestehen aus einer parkettierten Struktur zusammenhängender, vertikaler Einzel- und Doppelstege die sich in einer Ausbreitungsebene erstreckt. Je nach Wabenkern können Stege parallel zur Maschinenlaufrichtung, im Winkel von 0°, oder aber im beliebigen Winkel bis hin zur Ausrichtung quer zur MLR (Winkel von 90°) ausgerichtet sein. Beim regelmäßigen Hexagonalwabenkern, der der Struktur von Bienenwaben ähnelt, beträgt dieser Winkel 30°.

Im Zuge des erfindungsgemäßen Verfahrens werden die Wabenkerne mittels einer Zugkraft, die in MLR wirkt, gestreckt (expandiert). Bei diesem Expandieren verändert sich die Winkellage der Einzelstege zur MLR, so dass Stege des Wabenkerns aufgrund der Zugkraft in Bewegungsrichtung ausgerichtet werden. Alternativ können auch bereits expandierte Wabenkerne genutzt werden.

Damit ein Wabenkern expandierbar ist, müssen Stege des Wabenkerns mittels einer Zugkraft ihre Winkellage in Richtung der Zugkraft verändern können. Beim vorliegenden Verfahren wirkt die Zugkraft parallel zur Bewegungsrichtung.

Im Zuge des Überexpandierens werden erfindungsgemäß die Wabenkerne derart gestreckt, dass ein Teil der Stege, aus der Lage, die sie im expandierten Zustand einnehmen, weiter in MLR ausgerichtet wird. Somit werden Stege, die vollständig oder teilweise in einer Richtung quer zur Maschinenlaufrichtung ausgerichtet sind, mittels einer Zugkraft stärker in Maschinenlaufrichtung ausgerichtet.

Es müssen jedoch nicht alle Stege in Bewegungsrichtung ausgerichtet werden. Bei einem Hexagonalwabenkern können bspw. die Doppelstege weiterhin quer zur MLR ausgerichtet sein, während die Einzelstege durch die Zugkraft vollständig bzw. annähernd vollständig in MLR ausgerichtet werden, die Zellen des Wabenkerns demnach in MLR gestreckt sind. Durch das Strecken verringert sich die Zellausdehnung quer zur MLR und einhergehend auch die gesamte Wabenkernbreite. Sind die Zellen entsprechend ausgerichtet, wird die zur Expansion benötigte Zugkraft gelöst. Vor dem Lösen der Zugkraft beginnen vorteilhaft seitliche Führungselemente die materialbedingte Rückverformung zu unterdrücken. Sie hindern den Wabenkern daran, sich wieder quer zur MLR auszubreiten und erhalten so den Zustand der Überexpansion, ohne dass die zur Expansion benötigte Zugkraft wirkt, bei. Im nächsten Verfahrensschritt werden die in MLR ausgerichteten Stege geknickt bzw. gefaltet. Diese durch das Knicken bzw. Falten entstandenen Materialreserven gestatten im Zuge der Weiterverarbeitung eine einfache oder doppelte Krümmung des Wabenkerns aus der flächigen Ausdehnung des ungekrümmten Wabenkerns heraus.

Das erfindungsgemäße Verfahren erlaubt im Allgemeinen die Weiterverarbeitung herkömmlicher Wabenkerne; im Speziellen die Weiterverarbeitung expandierbarer Hexagonalwabenkerne aus Papier, da diese trotz eines hohen Vorfertigungsgrades, vorteilhaft zu günstigen Preisen, aufgrund sehr produktiver Herstellungsverfahren und preiswerten Papiers und Klebstoffs erhältlich sind. Sie werden in unexpandierter Form und so vorteilhaft kompakt für Transport und Lagerung ausgeliefert und meist erst beim Weiterverarbeiter vor der Verwendung zu ihrer hexagonalen Form expandiert.

Die bereits bekannte, herkömmliche Expansion des Hexagonalwabenkerns umfasst das Auseinanderziehen des Kerns und die zeitweise Fixierung der entstandenen Form durch Trocknung, wodurch die Papierfeuchte abgesenkt und somit die Form gehalten wird. Die Expansionsrichtung entspricht üblicherweise der Maschinenlaufrichtung (MLR - die Richtung, in der der Wabenkern die Maschine durchläuft). Wird ein Hexagonalwabenkern überexpandiert, die Zellen also über die regelmäßig hexagonale Form hinaus auseinandergezogen, entstehen Zellen, deren Grundfläche sich einer Rechteckform annähern. Die Einzelstege einer Zelle sind dann annähernd parallel zur Maschinenlaufrichtung, die zwei sich gegenüberliegenden Doppelstege quer zur Maschinenlaufrichtung ausgerichtet. Der beschriebene Verfahrensschritt wird beispielsweise im Gebrauchsmuster CN 2 512 594 Y beschrieben.

In Abhängigkeit vom Material des Wabenkerns sowie seiner Zellstruktur sind einige Wabenkernarten jedoch nicht expandierbar und werden daher in ihrer weiter zu verarbeitenden Form ausgeliefert. Der Begriff Wabenkern beschreibt somit eine ganze Reihe verschiedenster Kernstrukturen als Kernlage für Sandwich-, bzw. Stützstoffbauteile. Allen gemein ist, dass sie aus Sandwichdecklagen-stützenden-Stegen bestehen, welche Hohlräume umschließen und somit die leichte und dennoch hoch belastbare Kernlage der Sandwich- bzw. Stützstoffbauteile bilden. Somit existieren auch Wabenkerne mit anderen Zellgeometrien, welche aber auch mit dem neuartigen Verfahren veredelt werden können. So sind beispielsweise Zellgeometrien mit unregelmäßiger Zellform bei denen die Zellen unterschiedlich groß sind, die einzelnen Stege unterschiedlich lang oder bei denen die Zellgrundform polygonal bis kreisförmig ist, möglich. Wesentlich bei den verarbeitbaren Wabenkernen bzw. Zellformen ist, dass diese überexpandierbar sind, d. h., dass sich Stege durch Auseinanderziehen des Wabenkerns aus der Lage, die sie im expandierten Zustand einnehmen, stärker in MLR ausrichten lassen. Beispielsweise ist ein Wabenkern, der aus viereckigen Zellen besteht, bei denen die Zellen in der Draufsicht ein Karo bzw. Schachbrettmuster bilden und die Längsstege parallel zur Bewegungsrichtung verlaufen, nicht überexpandierbar. Wenn die Längsstege benachbarter Zellen jedoch an der Mitte der Querstege der benachbarten Zelle angreifen würden, wäre dieser Wabenkern in MLR überexpandierbar.

Hinsichtlich umzuformender Materialien können so gut wie alle bekannten Wabenmaterialien verarbeitet werden. Dies umfasst Papiere, Metalle, Kunststoffe, Vliesstoffe, z. B. aus Polyethylen oder Polyaramiden und Faserverbundmaterialien.

Mit dem neuartigen Verfahren können Bögen sowie auch bahnförmige Stränge von Wabenkernen verarbeitet werden. Unexpandierte Hexagonalwabenkerne liegen zumeist mäanderförmig, quasi endlos auf Palette vor und können somit quasi kontinuierlich umgeformt werden.

Das erfindungsgemäße Verfahren zur Herstellung flexibel formbarer Wabenkerne aus Wabenkernen umfasst zumindest die folgenden Verfahrensschritte:
a) Bereitstellen eines überexpandierbaren Wabenkerns und Zuführen zu einer Verarbeitungsvorrichtung in der Maschinenlaufrichtung (MLR),
b) Überexpandieren des Wabenkerns in Maschinenlaufrichtung indem der Wabenkern derart gestreckt wird, dass ein Teil der Stege aus der Lage, die sie im expandierten Zustand einnehmen, weiter in MLR ausgerichtet wird,
c) Fixieren der Schmalseiten der Stege des überexpandieren Wabenkerns, in mindestens zwei in Maschinenlaufrichtung voneinander beabstandeten Ebenen, die senkrecht zur MLR verlaufen,
d) Knicken und Falten der Stege durch eine Relativbewegung der voneinander beabstandeten Ebenen parallel zur Maschinenlaufrichtung aufeinander zu,
e) Lösen der Fixierung der Schmalseiten.

Optional erfolgt im Zuge von Schritt a) ein Expandieren des ggf. unterexpandiert zugeführten Wabenkerns.

Nach Schritt b) erfolgt optional bis einschließlich zu Schritt e) eine Führung des Wabenkerns, die eine seitliche Rückverformung des Wabenkerns nach dem Lösen einer Expansionszugkraft verhindert. Bevorzugt kommen dazu seitliche Führungen oder Führungselemente, die auf der Ober- bzw. Unterseite des Wabenkerns angreifen, zum Einsatz (bspw. flächig wirkende Andruckbänder).

Die Führung des Wabenkerns kann nach dem Umformbereich beliebig weit aufrechterhalten werden. Nach Lösen dieser Führung, die die Relaxation des Wabenkerns und somit die erneute Ausdehnung in der Ausbreitungsebene verhindert, können die Stege des Wabenkerns wieder weitgehend in ihre Ausrichtung, die sie vor der Überexpansion innehatten, zurückkehren.

Die Knick- und Faltstellen bleiben dabei weitgehend erhalten.

Für Hexagonalwabenkerne umfasst das erfindungsgemäße Verfahren in einer bevorzugten Vorgehensweise somit mindestens die folgenden Schritte:
a) Bereitstellen eines überexpandierbaren Hexagonalwabenkerns und Zuführung zu einer Verarbeitungsvorrichtung in Maschinenlaufrichtung,
b) Überexpandieren des Hexagonalwabenkerns, wobei der Hexagonalwabenkern vorzugsweise derart weit überexpandiert wird, dass die Einzelstege weitgehend parallel zur Maschinenlaufrichtung und die Doppelstege quer dazu ausgerichtet sind;
c) Fixierung der Schmalseiten der Stege des Hexagonalwabenkerns in mindestens zwei in Maschinenlaufrichtung voneinander beabstandeten Ebenen, die senkrecht zur MLR verlaufen;
d) Knicken und Falten der weitgehend parallel zur Maschinenlaufrichtung ausgerichteten Stege des überexpandierten Hexagonalwabenkerns durch eine Relativbewegung der mindestens zwei voneinander beabstandeten Ebenen parallel zur Maschinenlaufrichtung aufeinander zu;
e) Lösen der Fixierungen.

Optional erfolgt im Zuge von Schritt a) ein Expandieren des ggf. unterexpandiert zugeführten Hexagonalwabenkerns.

Nach Schritt b) erfolgt optional bis einschließlich zu Schritt e) eine Führung des Hexagonalwabenkerns, die eine seitliche Rückverformung des Hexagonalwabenkerns nach dem Lösen einer Expansionszugkraft verhindert. Bevorzugt kommen dazu seitliche Führungen oder Führungselemente, die auf der Ober- bzw. Unterseite des Hexagonalwabenkerns angreifen, zum Einsatz (bspw. flächig wirkende Andruckbänder).

Die Führung des Wabenkerns kann nach dem Umformbereich beliebig weit aufrechterhalten werden. Nach Lösen dieser Führung, die die Relaxation des Wabenkerns wieder in Breite verhindert, kehren die Stege der Wabenkerne weitgehend in ihre Ausrichtung, die sie vor der Überexpansion innehatten, zurück.

Die folgenden Erläuterungen gelten, soweit nicht anders angegeben, sowohl für das allgemeine Verfahren für Wabenkerne als auch für die bevorzugte Vorgehensweise bei Hexagonalwabenkernen. Es wird dazu der Begriff Wabenkern verwendet, der hier auch durch den Spezialfall "Hexagonalwabenkern" ersetzt werden kann.

Das Bereitstellen des überexpandierbaren Wabenkerns in Verfahrensschritt a) umfasst das Bereitstellen eines unexpandierten, eines unterexpandierten oder eines Wabenkerns, der in dem Zustand vorliegt, in dem er nach dem Stand der Technik weiterverarbeitet würde (expandiert).

In Verfahrensschritt b) wird die zum Überexpandieren des Wabenkerns benötigte Zugkraft beispielsweise aufgebracht, indem unterschiedlich schnell laufende Förderwalzenpaare zum Einsatz kommen, die den Kern bewegen. Dabei läuft die von der Zufuhr des Kerns weiter entfernte Förderwalze schneller, als die der Zufuhr näher gelegene. Dadurch wird der Kern auseinandergezogen - überexpandiert.

Im Spezialfall der bevorzugten Vorgehensweise wird das Überexpandieren des Hexagonalwabenkerns so vorgenommen, dass die Einzelstege weitgehend parallel zur Maschinenlaufrichtung und die Doppelstege überwiegend quer zur Maschinenlaufrichtung ausgerichtet sind. Beispielsweise kann dies durch unterschiedlich schnell laufende Förderwalzenpaare erzielt werden.

Sowohl bei dem allgemeinen Verfahren zur Verarbeitung überexpandierbarer Wabenkerne als auch in der bevorzugten Vorgehensweise für Hexagonalwabenkerne erfolgt die Fixierung der Schmalseiten der Stege vorzugsweise auf zwei alternative Weisen:
- In einer ersten bevorzugten Ausführungsform wird in Verfahrensschritt c) die Fixierung der Schmalseiten der Stege des überexpandierten Wabenkerns mittels mindestens zweier über die Maschinenbreite reichender Backenpaare durch Klemmen der Schmalseiten der Stege des überexpandierten Wabenkerns zwischen den beiden Backen des jeweiligen Backenpaars realisiert. Zum Klemmen führen die Backenpaare eine Relativbewegung vorzugsweise in einer Ebene, senkrecht zur MLR, aufeinander zu, aus. Die Bewegung der Backen erfolgt bevorzugt senkrecht zu der Ober- bzw. Unterseite des Wabenkerns. Zwischen den Backenpaaren befinden sich demnach die mittels Reibschluss fixierten, nahezu parallelen Einzelstege des überexpandierten Wabenkerns. Die Backenpaare müssen so ausgeführt sein, dass Sie die später zum Umformen benötigte Kraft auf den Wabenkern übertragen können. Dazu weisen die Backenpaare bevorzugt ein Material, welches in Kombination mit dem Material des Wabenkerns einen hohen Reibungskoeffizienten besitzt, auf, so dass mit vergleichsweise geringer Klemmkraft eine hohe Umformkraft übertragen werden kann. Dies wird bspw. durch mindestens je eine Gummilippe an jeder Backe realisiert, die beim Fixieren zum Kraftschluss mit den geklemmten Stegen des Wabenkerns und somit zur Kraftübertragung dient. Eine vorteilhafte Weiterentwicklung dieser Ausführungsform sieht vor, die Backen abweichend von der geraden Form auch wellenförmig oder zick-zack-förmig parallel zur Ausbreitungsebene des Wabenkerns zu gestalten. Durch das Fixieren des Wabenkerns an unterschiedlichen Stellen wird so die maximal benötigte Umformkraft gemittelt, die sonst abhängig vom zufällig über die gesamte Bahnbreite fixierten Wabenkern ist. Dadurch ergibt sich eine gleichmäßigere, aufzubringende Umformkraft. Ein analoges Ergebnis kann erzielt werden, wenn gerade Backen schräg angeordnet werden.
- In einer zweiten bevorzugten Ausführungsform sind die Backen ähnlich einem Kamm gestaltet. Jede der beiden Backen ist dabei kammartig mit Zinken ausgebildet, die zum Fixieren des Wabenkerns geringfügig (bevorzugt zwischen 3% und 20% der Steghöhe) in die Zellhohlräume eintauchen. Ein jeder Kamm besitzt wesentlich mehr Zinken als Wabenkernstege vorhanden sind, so dass die Stege immer von zwei benachbarten Zinken eingeschlossen werden. Fixiert werden die Stege, indem der Grund der zwischen den Zinken befindlichen Hohlräume auf den Wabenkern drückt. Die Zinken selbst dienen vorzugsweise als richtungsgebende Führung für die umzuformenden Stege. Die Stege befinden sich somit zwischen den Zinken, die wiederum für die Stege als Führungen für den Umformvorgang dienen. Optional kann so durch die Ausrichtung der Zinken die Richtung vorgegeben werden, in die die Faltung bzw. das Knicken des Stegs erfolgen soll. Wenn die Ausrichtung der Zinken optional leicht von der Maschinenlaufrichtung abweicht, reduziert sich so die maximal aufzubringende Umformkraft.

Das Stauchen (Falten und Knicken) der nahezu parallel zur Maschinenlaufrichtung ausgerichteten Stege des Wabenkerns wird in Verfahrensschritt d) durch eine Relativbewegung der (mindestens zwei) Backenpaare aufeinander zu realisiert. Dabei Knicken die zwischen den Backenpaaren befindlichen, nicht geklemmten Bereiche zunächst aus. Durch die weitere Bewegung der Backenpaare aufeinander zu, werden die Falt- und Knickstellen noch stärker ausgebildet. Diese Falt- und Knickstellen bilden dauerhafte, in das Material eingeprägte Verformungen, welche auch nach Lösen der Fixierungen bestehen bleiben.

Nach dem Knicken und Falten wird die Fixierung gelöst, indem die Backen der Backenpaare auseinanderbewegt werden und so den Wabenkern freigeben. Anschließend werden die Backenpaare in die Ausgangsposition zurückbewegt, indem eine Relativbewegung der Ebenen, in denen die Backenpaare liegen, voneinander weg erfolgt. Anschließend kann ein erneuter Zyklus von Fixieren (Klemmen), Relativbewegung der Ebenen der Backenpaare aufeinander zu, Lösen der Fixierung und Relativbewegung der Ebenen der Backenpaare voneinander weg (Rückbewegung in die Ausgangslage) beginnen.

Als Ausführungsvariante können zur Unterstützung der Umformung die Backenpaar-Bewegungen auch von der Maschinenlaufrichtung leicht abweichen, beispielsweise indem die Relativbewegung der Ebenen aufeinander zu mit einer geringfügigen Bewegung quer zu MLR überlagert wird. Dadurch wird die maximal aufzubringende Knickkraft durch die Vorgabe der Knickrichtung reduziert.

Da Wabenkerne herstellungsbedingt zumeist nicht exakt gleichförmig sind, sie meist aus anisotropen Materialien bestehen und somit partiell leicht schwankende Eigenschaften besitzen und die Expansion auf die einzelnen Zellen leicht unterschiedlich wirkt, werden die einzelnen Zellen des Wabenkerns durch die Backenpaare hinsichtlich des Ortes der Fixierung rein stochastisch fixiert. Dies führt bei der Umformung zu einer ungleichmäßigen Zellstruktur des flexibel formbaren Wabenkerns. Je nach Intensität der Faltung im Verfahrensschritt d) und den partiell unterschiedlichen Rückstellkräften des Materials stellen sich verschieden stark ausgeprägte Rundungen bis hin zu scharfkantigen Knicken und Faltlinien im umgeformten Bereich ein.

Je nachdem welche Stelle die Backenpaare zufällig greifen, gibt es drei prinzipielle Varianten wohin der Knick erfolgt und ob dies zufällig ist. Durch die Biegesteifigkeit des Kemmaterials stellt sich eine mehr oder weniger stark ausgeprägte "S-Form" der Einzelstege beim Expandieren ein. Diese "S-Form" verhindert, dass der Wabenkern unter der benötigten Klemmbelastung der Backenpaare zusammenbricht und gibt in zwei der drei Varianten die Knickrichtung vor.

Zusammengefasst haben neben verschiedenen, verarbeitbaren Zellgeometrien weitere Faktoren Einfluss auf die Geometrie des resultierenden flexibel formbaren Wabenkerns. Dies sind z.B. das umzuformende Material, der Expansionsgrad, der Abstand der Backenpaare beim Klemmen, die Bewegung der Backenpaare, die Gestaltung der Umformwerkzeuge sowie nicht zuletzt die Umgebungsbedingungen.

Für den Fall, dass ein quasi endloser Wabenkern verarbeitet wird, kann das Verfahren als quasi kontinuierlich beschrieben werden, obwohl die Bewegung der Umformbacken zyklisch stattfindet. Dies beruht darauf, dass der umgeformte Wabenkern während der gesamten Verarbeitung durch die Maschine kontinuierlich gefördert wird. Die dabei zyklisch eingebrachten Knickstellen wirken federnd, wodurch ein quasi kontinuierlicher Austrag entsteht. Bei der Verarbeitung von Bögen ist die Expansion derart abzuwandeln, dass auch der erwünschte Überexpansionsgrad erreicht wird. Auch hier ist zunächst die Überexpansion des Wabenkerns vorzunehmen. Danach wird seitlich begrenzt, um den Rückstellkräften entgegen zu wirken und der Wabenkern derart in die Umformzone transportiert. Für die Verwendung als Kernlage ist der umgeformte Wabenkern in beiden Fällen lediglich noch zu Konfektionieren.

Durch die Überexpansion sowie das Knicken und Falten und das damit einhergehende plastische Deformieren des Materials kann zudem optional auf die sonst übliche Trocknung beim Expandieren des Kerns verzichtet werden, da der umgeformte Wabenkern durch die eingebrachten Knicke und Falten weitgehend im umgeformten Zustand verbleibt.

Durch die mit Knick- und Faltstellen ausgestatteten Stege weist der mit dem erfindungsgemäßen Verfahren hergestellte flexibel formbare Wabenkern ausreichende Dehn- sowie Stauchreserven für eine zerstörungsfreie, dreidimensionale Formung des Wabenkerns auf. Die Falten und Knicke bilden also eine Materialreserve, die zum flexiblen Formen des Wabenkerns genutzt werden kann

Ergebnis des erfindungsgemäßen Verfahrens sind flexibel formbare Wabenkerne mit vorteilhaften Umformeigenschaften, deren Zellstruktur unregelmäßige, zufällig geformte geometrische Figuren bilden.

Wesentliche Vorteile des erfindungsgemäßen Verfahrens sowie der resultierenden, flexibel formbaren Wabenkerne bzw. Hexagonalwabenkerne gegenüber dem Stand der Technik sind:
- Verarbeitung einer Vielzahl am Markt erhältlicher Wabenkerne (Zellgeometrie, -höhe, Wabenmaterial) lediglich durch die Anpassung von Verfahrensparametern;
- Formbarkeit des resultierenden, geometrisch ungleichförmigen Wabenkerns oft besser, da eine Übertragung mechanischer Effekte über mehrere Zellen hinweg unterbunden wird;
- Geringe Materialkosten durch Umformen herkömmlicher, kostengünstiger Wabenkerne, somit Eignung für diverse Industriezweige, auch am Massenmarkts, z. B. den Möbelbau, die Verpackungsindustrie, den Automobilbau, die Luftfahrt etc.;
- Wesentlich verringerter Aufwand bei der technischen Umsetzung zur Herstellung flexibel formbarer Wabenkerne;
- Gute Prozesssicherheit und niedrige Ausfallwahrscheinlichkeit;
- Verfahrensschritt der Trocknung - herkömmliches Expandieren von Papierwabenkernen entfällt
- Verschiedene Vertriebswege, d. h. das Verfahren kann z. B. bei den Herstellern von Wabenkernen als zusätzliche Veredelungsstufe, bei separaten Unternehmen, die Materialien veredeln oder auch direkt beim späteren Weiterverarbeiter des flexibel formbaren Wabenkerns zum Sandwichbauteil Anwendung finden.

In einer Ausführungsform des erfindungsgemäßen Verfahrens besteht der unexpandierte, quasi endlose Hexagonalwabenkern des Verfahrensschritts a) aus Papier. Vorteilhaft sind diese, da sie besonders kostengünstig, leicht und dennoch höchst druck- und schubfest sind.

Die Offenbarung betrifft des Weiteren, jedoch außerhalb des Schutzumfangs der Ansprüche, die Verwendung eines mit dem erfindungsgemäßen Verfahren hergestellten flexibel formbaren Wabenkerns als Kernlage von Waben-, Sandwich-, bzw. Stützstoffbauteilen.

Weiterhin umfasst die Erfindung die Umsetzung in eine maschinelle Vorrichtung zur Durchführung des neuartigen Verfahrens. Die Eigenschaften dieser Vorrichtung sind oben, im Zuge der Verfahrensbeschreibung, offenbart worden.

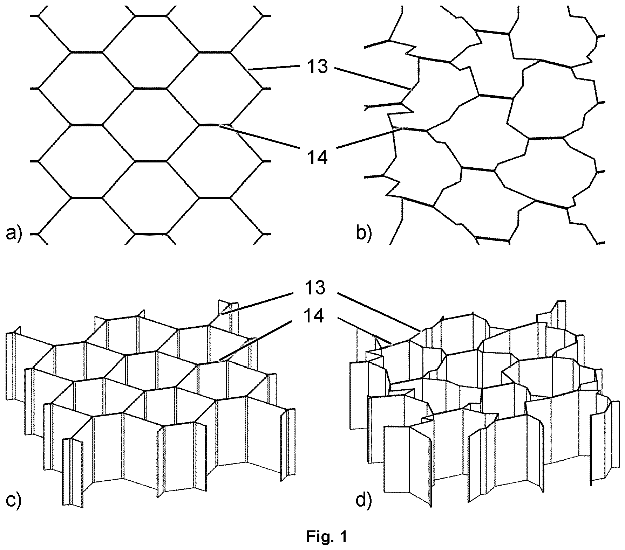

Die Erfindung wird im Folgenden durch Ausführungsbeispiele anhand von Figuren erläutert, ohne auf diese beschränkt zu sein. Dabei zeigt die
**Fig. 1** Vergleich der Zellform eines herkömmlichen Hexagonalwabenkerns in einer Draufsicht a) und einer perspektivischen Ansicht c) sowie eines flexibel formbaren Wabenkerns, hergestellt nach dem neuartigen Verfahren in einer Draufsicht b) und in einer perspektivischen Ansicht d);
**Fig. 2** Schematische Darstellung der Umformung eines unexpandierten Hexagonalwabenkerns zu einem flexibel formbaren Wabenkern nach dem neuartigen Verfahren ohne Berücksichtigung der Vorrichtungselemente;
**Fig. 3** Draufsicht auf die Zellgeometrie eines gleichseitigen Hexagonalwabenkerns in unexpandierter Form a), in regelmäßiger Form b) und in maximal überexpandierter Form c);
**Fig. 4** Wirkelemente samt beispielhafter Bewegungsbahnen zur Umformung herkömmlicher Hexagonalwabenkerne in Seitenansicht a) vergrößerten Darstellungen A und B in b) sowie in Draufsicht c);

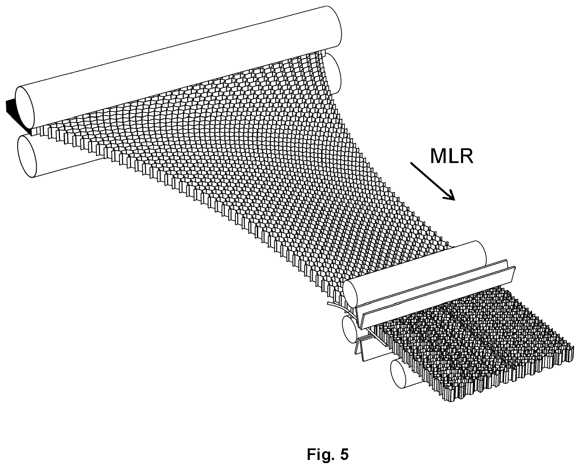

**Fig. 5** Dreidimensionale Darstellung der Wabenkernumformung und der wesentlichsten Wirkelemente
**Fig. 6** Ausführungsbeispiel des Verfahrens in Seitenansicht und Draufsicht
Fig. 7 Beispiel der zentralen Komponenten des Umformbereichs einer Vorrichtung zur Ausführung des Verfahrens
Fig. 8 Schematische Darstellung unterschiedlicher Ausführungsformen von Umformbacken, speziell der oberen Umformbacken 8, 9, die in Darstellung a) eine Zick-zack-Form, in Darstellung b) eine Wellen-Form und in Darstellung c) eine gerade, jedoch zur MLR geneigte Form, aufweisen.

### Bezugszeichen

- 1: Unexpandierter Hexagonalwabenkern
- 2: Wabenkern in der Überexpansion (Überexpandierter Wabenkern)
- 3: Wabenkern während der Umformung zum flexibel formbaren Wabenkern
- 4: Flexibel formbarer Wabenkern
- 5: Einzugswalzenpaar
- 6: Expansionswalzenpaar
- 61: Pneumatischer Antrieb zur Bewegung der oberen Expansionswalze
- 62: Pneumatischer Antrieb für die Knickbewegung
- 7: Kernführungselemente bis zum Umformbereich
- 71: Optionale Kernführungselemente nach dem Umformbereich
- 8: Obere, den Expansionswalzen nächstgelegene Umformbacke
- 81: Hebelarm zur Bewegung der Umformbacke 8
- 82: Pneumatischer Antrieb zur Bewegung des Hebelarmes 81
- 9: Obere, in MLR letztgelegene Umformbacke
- 91: Hebelarm zur Bewegung der Umformbacke 9
- 92: Pneumatischer Antrieb zur Bewegung des Hebelarmes 91
- 10: Untere, den Expansionswalzen nächstgelegene Umformbacke
- 101: Hebelarm zur Bewegung der Umformbacke 10
- 102: Pneumatischer Antrieb zur Bewegung des Hebelarmes 101
- 11: Untere, in MLR letztgelegene Umformbacke
- 111: Hebelarm zur Bewegung der Umformbacke 11
- 112: Pneumatischer Antrieb zur Bewegung des Hebelarmes 111
- 12: Abzugswalze
- 13: Einzelsteg
- 14: Doppelsteg
- MLR: Maschinenlaufrichtung
- B1: Bereich in dem der expandierte Wabenkern vorliegt
- B2: Bereich der Überexpansion
- B3: Umformbereich
- B4: Bereich in dem der flexibel formbare Wabenkern vorliegt

### Ausführungsbeispiel Verfahren

In den Ausführungsbeispielen kennzeichnen die Bezugszeichen 1, 2, 3 und 4 denselben Wabenkern in unterschiedlichen Verarbeitungszuständen: 1 - unexpandierter Wabenkern, 2 -überexpandierter Wabenkern, 3 Wabenkern während der Umformung zum flexibel formbaren Wabenkern, 4 - flexibel formbarer Wabenkern.

### Erstes Ausführungsbeispiel

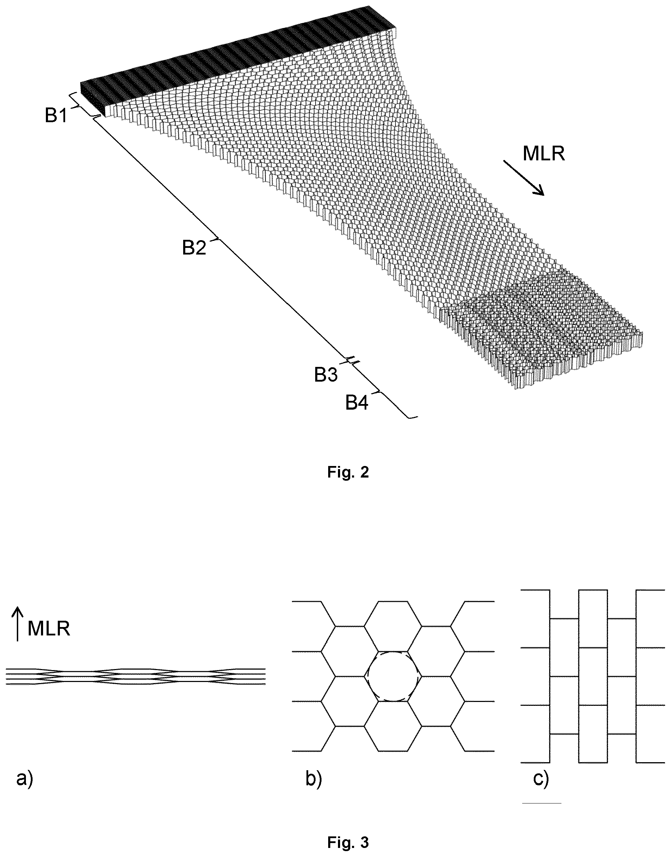

In einem Ausführungsbeispiel des erfindungsgemäßen Verfahrens umfasst Verfahrensschritt a) und b), das Überexpandieren eines expandierbaren Wabenkerns (siehe Fig. 3), folgende Unterverfahrensschritte:
Bereitstellen eines unexpandierten, meist auf einer Palette abgelegten, quasi endlosen Papierwabenkerns 1 (Fig. 2, Bereich B1). Im Beispiel ist dies ein Papierwabenkern 1 aus der Papierqualität Testliner 3, mit einer Grammatur von 140 g/m², einer unexpandierten Kernbreite von 1300 mm, einer Zellweite von 15 mm und einer Kernhöhe von 19 mm. Es handelt sich um einen Hexagonalwabenkern.

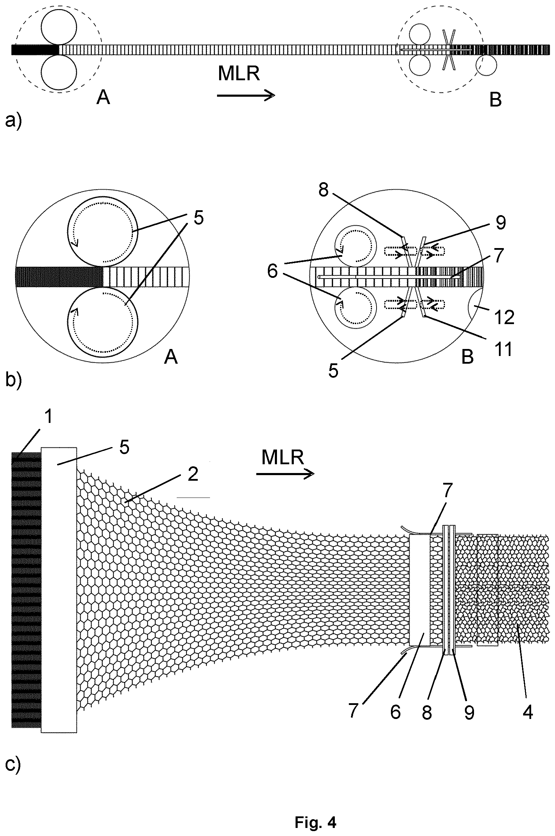

Zunächst erfolgt das Überexpandieren des Wabenkerns 1, so dass die Einzelstege weitgehend parallel zur Maschinenlaufrichtung (MLR) und die Doppelstege überwiegend quer zur Maschinenlaufrichtung ausgerichtet sind (vgl. Fig. 3). Im Ausführungsbeispiel wird dies durch die Differenz der Tangentialgeschwindigkeiten zwischen Einzugswalzenpaar 5 und Expansionswalzenpaar 6 erreicht (Fig. 4). Die zur Expansion benötigte Bahnspannung wird durch eine Momentenregelung des Einzugswalzenpaars 5 erreicht. Die Maschinengeschwindigkeit ist somit abhängig von der variabel einzustellenden Tangentialgeschwindigkeit der Expansionswalzen, welche im Ausführungsbeispiel 5 m/min beträgt. Je höher die eingestellte und somit wirkende Bahnspannung ist, desto höher ist der Expansionsgrad des Wabenkerns 2 und die Zellgrundform gleicht eher einer Rechteckform (vgl. Fig. 3 c), maximal überexpandierte Form). Durch die auftretende Querkontraktion verringert sich die Bahnbreite. Im Ausführungsbeispiel und unter der Annahme einer maximalen Überexpansion verringert sich die Bahnbreite um die Hälfte ihrer Ausgangsbreite im unexpandierten Zustand.

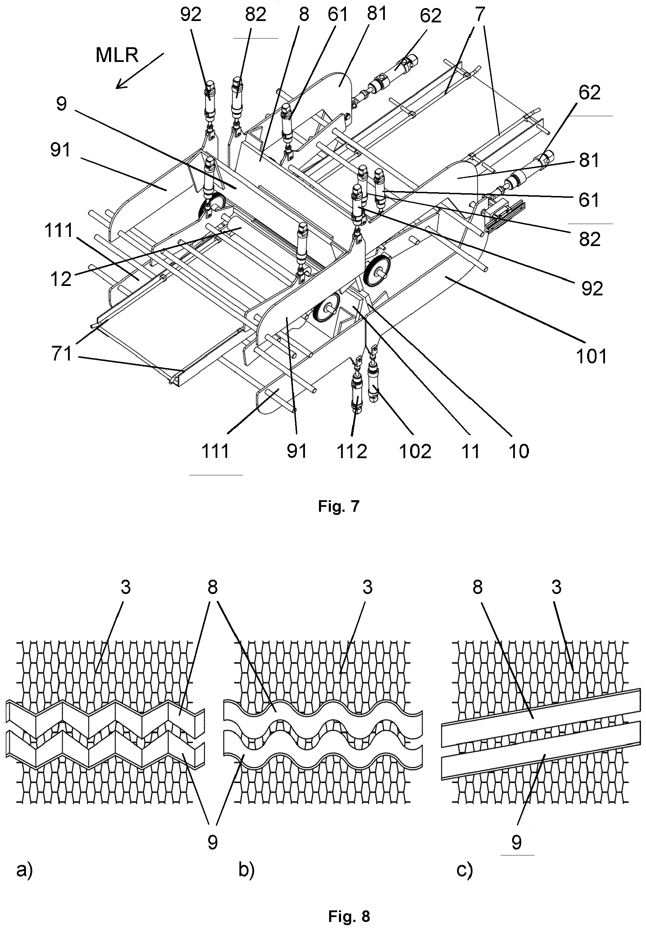

Nach der Überexpansion ist dieser Zustand wenigstens bis zum Umformbereich (Fig. 2, Bereich B3) zu halten. Im Ausführungsbeispiel wird dies durch zwei Führungselemente 7 realisiert, welche die seitliche Relaxation unterbinden (Fig. 7).

Als Verfahrensschritt c) umfasst das erfindungsgemäße Verfahren das Klemmen bzw. Fixieren des überexpandierten Hexagonalwabenkerns 2 mittels mindestens zweier Backenpaare 8, 10 und 9, 11 durch Einklemmen der Wabenkern-Steg-Schmalseiten des überexpandierten Wabenkerns 2. Der Abstand zwischen dem den Expansionswalzen 6 nächstgelegenen 8, 10 und dem, in MLR letztgelegenen Backenpaar 9, 11 im Moment der Klemmung ist einstellbar. Derart kann die Knicklänge und somit -häufigkeit auch auf verschiedene Zellgeometrien, und Kernmaterialien angepasst werden. Zum Fixieren verfahren die oberen 8, 9 und unteren Backen 10, 11 aufeinander zu, bis die benötigte Klemmkraft erreicht wurde. Die Backen 8-11 berühren die Stege mit Gummilippen. Die Klemmkraft wird auf die minimale Druckfestigkeit des Wabenkerns 2 begrenzt. Im Ausführungsbeispiel liegt diese bei ca. 0,83 N/mm². Die Backenpaare 8-11 müssen so ausgeführt sein, dass Sie die später zum Umformen benötigte Kraft auf das Papier übertragen können. Nach dem Verfahrensschritt befinden sich demnach zwischen den Backenpaaren 8-11 nicht geklemmte, nahezu parallele Stege, üblicherweise Einzelstege des überexpandierten Hexagonalwabenkerns mit leichter "S-Form", die es im nächsten Schritt umzuformen gilt.

Durch eine Relativbewegung der mindestens zwei Backenpaare 8, 10 und 9, 11 parallel zur Maschinenlaufrichtung MLR aufeinander zu in Verfahrensschritt d) des erfindungsgemäßen Verfahrens, werden die Stege 13 des überexpandierten Hexagonalwabenkerns 3 geknickt und gefalten, bis sich durch die Stauchung, je nach Material, Geometrie und Intensität mehr oder weniger stark ausgeprägte Knick- und Faltstellen ausbilden. Im vorliegenden Ausführungsbeispiel vollzieht das den Expansionswalzen 6 nächstgelegene Backenpaar 8, 10 die Knickbewegung in Maschinenlaufrichtung mit der gleichen Geschwindigkeit wie die Expansionswalzen 6 den Wabenkern 3 fördern. Das Backenpaar 9, 11 verbleibt an seiner Position. Zur Unterstützung der Umformung können weitere Ausführungsformen von der reinen Bewegung in Maschinenlaufrichtung MLR abweichen, beispielsweise durch eine leicht schräge Führung, was die maximalen Umformkräfte reduziert. Auch können beide oder nur das hintere Backenpaare bewegt werden.

Im Verfahrensschritt e) lösen die Backenpaare 8, 10 und 9, 11 die Klemmung (Fixierung). Im Ausführungsbeispiel öffnet zunächst das in MLR letztgelegene Backenpaar 9, 11 seine Klemmung, so dass der nun umgeformte Wabenkern 4 in MLR frei verschiebbar ist. Durch verbleibende Rückstellkräfte der umgeformten Bereiche im Wabenkern 4 verschiebt sich der Wabenkern 4 zusätzlich zur stetigen Bewegung des Wabenkerns 4 in Maschinenlaufrichtung MLR. Kurz danach öffnet auch das den Expansionswalzen 6 nächstgelegene Backenpaar 8, 10. Beide Backenpaare 8, 10 und 9, 11 verfahren daraufhin in ihre Ausgangsposition. Da die Expansionswalzen 6 den Wabenkern 4 stetig fördern, kann derart der Zyklus an folgenden, noch nicht umgeformten Stellen des Wabenkerns 3 von neuem beginnen.

Das Ausführungsbeispiel beschreibt eine quasi kontinuierliche Verarbeitung. Als Stellgröße dient dabei die Tangentialgeschwindigkeit der Expansionswalzen 6. Diese ist stufenlos bis zu einer Vorschubgeschwindigkeit und somit Förderleistung von 5 m/min einstellbar. Die Einzugswalzen 5 sind momentengeregelt und laufen daher abhängig von der Expansionswalzengeschwindigkeit und der einzustellenden Bahnspannung zur Überexpansion. Mit Zyklusbeginn fixieren die Backenpaare 8, 10 und 9, 11, wie in Verfahrensschritt b) beschrieben, den Wabenkern 3. Das den Expansionswalzen 6 nächstgelegene Backenpaar 8, 10 verfährt dann gleich der Vorschubgeschwindigkeit in Maschinenlaufrichtung MLR. Das in MLR letztgelegene Backenpaar 9, 11 verbleibt in seiner Position. Auf diese Weise entsteht eine Relativbewegung der beiden Backenpaare (8, 10 und 9, 11) aufeinander zu. Nach Lösen der Einspannungen, Verfahrensschritt d), verfährt das Backenpaar 8, 10 in seine Ausgangsposition. Dies erfolgt auf geeigneten Bewegungsbahnen mit entsprechend geeigneten Maschinenelementen, so dass die Backenpaare 8, 10 und 9, 11 ihre geöffnete Position bis zum nächsten Zyklusbeginn auch rechtzeitig erreichen und somit eine quasi kontinuierliche Verarbeitung resultiert. Da mit einer Maschine verschiedene Wabenkerne zu verarbeiten sind, müssen die Bewegungsbahnen sich an unterschiedliche, einzustellende Knicklängen anpassen lassen.

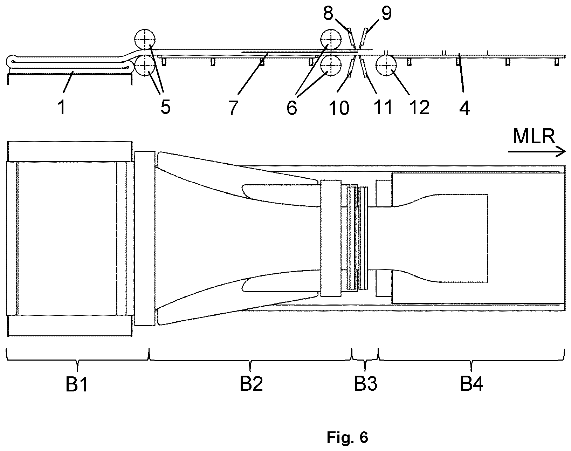

Im Ausführungsbeispiel findet eine weitere Walze 12 Anwendung (Fig. 6). Sie dient dem Transport des umgeformten Wabenkerns 4 und zieht/schiebt diesen auf einem Ablagetisch, so dass die Knickstellen keiner zu großen Belastung durch den reinen Vorschub der Expansionswalzen 6 unterliegen. Die Abzugswalze 12 im Ausführungsbeispiel besitzt keine Gegenwalze, so dass sich ggf. Schlupf einstellt und so der umgeformte Wabenkern 4 nicht wieder auseinander gezogen und somit seine Zellform negativ beeinflusst wird. Alternativ zu einer Walze sind auch die Verwendung von einem Förderband oder ähnliche Fördermechanismen möglich.

Durch das Überexpandieren und Knicken und die somit einhergehenden plastischen Deformationen des Materials kann beim Ausführungsbeispiel auf die Trocknung beim Expandieren des Wabenkerns verzichtet werden.

### Zweites Ausführungsbeispiel

Als Variante des ersten Ausführungsbeispiels können die Backen 8, 10 und 9, 11 auch so gestaltet werden, dass sie in die Zellhohlräume eintauchen, ähnlich einem Kamm, dessen Breite der Freiräume leicht größer als die umzuformende Materialdicke ist. Die Abstände der 0,4 mm breiten Zinken der Kämme betragen 0,25 mm, die Länge de Zinken 2 mm. Die Zinken tauchen bis auf den Grund und somit im Beispiel ca. 2 mm in die Zellhohlräume ein.

### Drittes Ausführungsbeispiel

Als Variante des ersten Ausführungsbeispiels können die Backen 8, 10 und 9, 11 auch so gestaltet werden, dass die Backen abweichend von der geraden Form auch wellenförmig oder zick-zack-förmig parallel zur Ausbreitungsebene des Wabenkerns gestaltet sind. Die Amplitude dieses wiederkehrenden Musters kann beispielsweise 6 mm betragen und alle 30 mm wiederkehren. Durch das Fixieren des Wabenkerns an unterschiedlichen Stellen wird so die maximal benötigte Umformkraft, die sonst abhängig vom zufällig über die gesamte Bahnbreite fixierten Wabenkern ist, gemittelt, wodurch sich eine gleichmäßigere, aufzubringende Umformkraft ergibt. Das gleiche Ergebnis kann erzielt werden, wenn gerade Backen schräg angeordnet werden.

### Ausführungsbeispiel Maschine

Eine Ausführungsform der maschinellen Umsetzung des Verfahrens wird wie folgt beschrieben. Dabei wird von der Verarbeitung eines quasi endlosen, herkömmlichen Hexagonalwabenkerns 1 aus Papier, im Auslieferungszustand mäanderförmig auf einer Palette gestapelt, ausgegangen. Beschrieben wird die quasi kontinuierliche Verarbeitung zum flexibel formbaren Wabenkern 4 aus Papier.

Die Vorbereitung der Verarbeitung beginnt, indem die beiden Walzen des Einzugswalzenpaars 5 und die beiden Walzen des Expansionswalzenpaar 6 jeweils zueinander auf Abstand verfahren. Im Ausführungsbeispiel sind jeweils die unteren Walzen der Walzenpaare 5 und 6 ortsfest und die oberen lassen sich anheben und absenken. Zum Einrichten des Prozesses werden sie angehoben. Daraufhin wird der Wabenkern 1 manuell bis hinter die Expansionswalze 6 über den gesamten Expansionsbereich gezogen. Dabei findet bereits eine gut ausgeprägte Expansion des Wabenkerns 2 statt. Dieser Zustand wird fixiert, indem die oberen Walzen (der Walzenpaare 5 und 6) auf den Wabenkern abgesenkt werden. Im Ausführungsbeispiel wird das Heben und Senken der Walzen (obere von 5 und 6) durch pneumatische Antriebselemente 61 und 92 durchgeführt, wodurch zugleich der benötigte Pressdruck auf den Wabenkern aufgebracht wird, der zur Reibung der Walzen mit dem Wabenkern und so für den Transport benötigt wird.

Zum Schaffen der erwünschten Überexpansion wird eine Geschwindigkeitsdifferenz der Tangentialgeschwindigkeiten zwischen Einzugswalzenpaar 5 und Expansionswalzenpaar 6 benötigt. Um diese Differenz nicht fortlaufend anpassen zu müssen und auch die max. mögliche Expansion beliebiger Wabenkerne annähernd zu erreichen, wird eine Momentenregelung des Einzugswalzenpaars 5 vorgesehen. Derart fungiert das Einzugswalzenpaar 5 als eine Art Bremse, die den Wabenkern 2 zurückhält und so die benötigte Bahnspannung/ Expansionskraft erzeugt, während das Expansionswalzenpaar 6 mit einer vorzugebenden Geschwindigkeit fördert. Weiterhin befinden sich in diesem Bereich manuell einstellbare Führungselemente 7 mit der Funktion, den überexpandierten Wabenkern 2 mindestens bis zum Umformbereich an einer seitlichen Relaxation zu hindern und so in seiner überexpandierten Form zu halten.

Der Umformbereich B3 besteht im Ausführungsbeispiel aus zwei Backenpaaren 8, 10 und 9, 11, welche öffnen und schließen. Das Fixieren des Kerns durch die Backenpaare 8, 10 und 9, 11 erfolgt infolge des Reibschlusses zwischen den Reibflächen der Backen und den Schmalflächen des Wabenkerns. Im Detail verfahren die unteren Backen 10, 11 zum Öffnen weiter nach unten und die oberen Backen 8, 9 werden angehoben. Zusätzlich kann das den Expansionswalzen 6 nächstgelegene Backenpaar 8, 10 entlang der MLR bewegt werden. All diese Bewegungen werden im Ausführungsbeispiel durch pneumatische Antriebselemente 82, 92, 102, 112, 62 ausgeführt, deren Betriebsdruck und wirkende Kolbenfläche mit den erforderlichen Kräften korreliert. Zur Bewegung der Backen 8, 10 und 9, 11 werden die Bewegungen der pneumatischen Antriebselemente über Hebelelemente 81, 91, 101, 111 auf die Backen 8, 9, 10, 11 übertragen. Zu Beginn eines Zyklus befindet sich das den Expansionswalzen 6 nächstgelegene Backenpaar 8, 10 maximal beabstandet zum in MLR letztgelegenen Backenpaar 9, 11. Der maximale Abstand ergibt sich aus dem einzustellenden Arbeitshub, welcher zugleich die Knicklänge darstellt. Dieser Arbeitshub ist vorzugsweise geringer als die Länge eines Einzelsteges. Idealerweise ist der Arbeitshub noch geringer zu wählen, da dadurch mehr Knickstellen und somit eine bessere Formbarkeit des Wabenkerns resultieren. Der minimale Arbeitshub ergibt sich aus dem Grenzwert, bei dem die Reibkräfte zwischen den Backenpaaren 8, 10 und 9, 11 und dem Wabenkern gerade noch zur Überwindung der Knickkräfte, welche sich mit verringernder Knicklänge erhöhen, ausreichen. Zum Knicken des Wabenkerns verfährt das den Expansionswalzen 6 nächstgelegene Backenpaar 8, 10 entlang der MLR in Richtung des in MLR letztgelegenen Backenpaars 9, 11 mit Hilfe der pneumatischen Antriebselemente 62. Dabei weichen die Stege des Wabenkerns 3 aus, so dass Knicke entstehen. Da die Stege nicht vorgeschwächt oder mit Rillen versehen sind, erfolgt das Ausweichen eher zufällig, so dass keine regelmäßige Zellstruktur resultiert. Im nächsten Schritt öffnet das in MLR letztgelegenen Backenpaar 9, 11 seine Fixierung, wodurch der Wabenkern 4 infolge verbliebener Rückstellkräfte in MLR verschoben wird. Abschließend öffnet auch das den Expansionswalzen 6 nächstgelegene Backenpaar 8, 10 und verfährt in seinen Ausgangszustand. Der Wabenkern 4 wird durch den Transport der Expansionswalzen 6 weitergeschoben. Dieser Umformablauf findet zyklisch statt und ist abhängig von der Tangentialgeschwindigkeit der Expansionswalzen 6.

Der umgeformte, flexibel formbare Wabenkern 4 aus Papier wird so auf den Ablagetisch gefördert. Um dies zu unterstützen kann der Ablagetisch wie im Ausführungsbeispiel durch eine oder mehrere Förderwalzen 12 den Wabenkern 4 zusätzlich abtransportieren. Alternativ könnte dies auch ein Förderband durchführen. Zum Abschluss ist der Wabenkern 4 lediglich noch zu Formatieren, bevor er als Kernlage in einem Wabenkern-, Sandwich- bzw. Stützstoffbauteil Verwendung findet.

Eine Variante des Ausführungsbeispiels bewegt zusätzlich zu dem, den Expansionswalzen 6 nächstgelegene Backenpaar 8, 10 auch das in MLR letztgelegene Backenpaar 9, 11. Das Backenpaar 9, 11 bewegt sich dann jedoch entgegen der MLR. Dadurch kann die Prozessgeschwindigkeit erhöht werden.

Eine Variante des Ausführungsbeispiels verwendet für die Rückhalte- bzw. Bremsfunktion des Einzugswalzenpaars 5 eine oder mehrere, ggf. auch segmentierte Gummilippen bzw. technische Bürsten, welche auf den Schmalseiten der Stege des Wabenkerns 3 Reibkräfte erzeugen. Zum Einstellen der Reibkräfte kann der Auflagedruck beispielsweise durch Beabstandung variiert werden. Ebenfalls sind gängige Methoden der Bahnspannungsregelung, wie z. B. ein Tänzerwalzensystem, für diese Funktion verwendbar.

Des Weiteren kann das Ausführungsbeispiel derart variiert werden, dass alle im Ausführungsbeispiel pneumatisch betriebenen Funktionen alternativ mit mechanischen bzw. elektromechanischen Systemen betrieben werden. Dies besitzt den Vorteil, dass die erforderlichen Bewegungen wesentlich präziser und schneller durchgeführt werden können. Auch können derart Bewegungsbahnen jeder einzelnen Backe frei programmiert werden. Auch sind geeignete Mechanismen zur schnelleren Bewegung der Backen und somit kürzeren Zykluszeiten integrierbar.

Im Expansionsbereich kann zudem ein Expansionstisch vorgesehen werden. Dieser dient zum Einfädeln des Kerns und somit der Vorbereitung sowie zum Vermeiden eines Durchhängens des Wabenkerns im Betrieb.

Die Führungselemente 7, die den Kern in seiner überexpandierten Form halten, können verschiedenartig gestaltet sein. Auch ihre Zustellung kann verschieden ausgeführt werden. Im Ausführungsbeispiel ist eine rein manuelle Verstellung mit entsprechenden Führungen und Feststellelementen vorgesehen. Sie kann jedoch auch mit mechanischen, pneumatischen bzw. elektromechanischen Systemen durchgeführt werden.

Die Umformbacken 8, 10 und 9, 11 sind im Ausführungsbeispiel gummiert. Der benötigte Reibschluss kann jedoch auch mit anderen Materialien erreicht werden. Auch muss die Knickbewegung nicht immer in MLR erfolgen. Z. B. führt eine leichte Seitwärtsbewegung zur Senkung der benötigten Knickkraft. Ebenfalls kann dies durch eine Art Kamm erreicht werden, der in die einzelnen Zellen eindringt und so mit seinen Freiräumen die umzuformenden Stege umschließt. Sind diese Freiräume zusätzlich noch ausgerichtet, leicht abweichend von der Maschinenlaufrichtung geben sie für den Knickvorgang bereits die Richtung des Ausknickens vor, was zur Reduzierung der benötigten Umformkraft führt. Eine gleichmäßigere Knickkraft kann erreicht werden indem Ausführungsvarianten andere Geometrien der Umformbacken 8, 10 und 9, 11, z.B. eine wellen- oder zick-zack-förmige Gestaltung vorsehen. Das gleiche kann erreicht werden indem gerade Backen schräg angeordnet werden.

Eine weitere Variante des Ausführungsbeispiels verwendet eine Vielzahl an Backenpaaren. Derart werden durch die Relativbewegung aller Backenpaare aufeinander zu wesentlich mehr Knicke und Falten in den Wabenkern eingebracht.

Das Ausführungsbeispiel fördert den Wabenkern größtenteils in der Horizontalen. Prinzipiell sind jedoch auch anderen Konstellationen realisierbar. So kann der Materialtransport und einhergehend die Verarbeitung auch vertikal bzw. in beliebigen Winkeln erfolgen. Entsprechend sind alle dem Verfahren zugehörigen Bewegungen in ihrer Orientierung anzupassen.

## Patentansprüche

1. Verfahren zur Herstellung eines flexibel formbaren Wabenkerns (4), umfassend zumindest die folgenden Verfahrensschritte:
a) Bereitstellen eines überexpandierbaren Wabenkerns (1) und Zuführen zu einer Verarbeitungsvorrichtung in einer Maschinenlaufrichtung (MLR),
b) Überexpandieren des Wabenkerns (4) in Maschinenlaufrichtung, indem der Wabenkern 4 derart gestreckt wird, dass ein Teil der Stege (13, 14) aus der Lage, die sie im expandierten Zustand einnehmen, weiter in MLR ausgerichtet werden,
c) Fixieren der Schmalseiten der Stege (13, 14) des überexpandierten Wabenkerns (2), in mindestens zwei in Maschinenlaufrichtung (MLR) voneinander beabstandeten Ebenen, die senkrecht zur MLR verlaufen mittels Klemmen des Wabenkerns (1) mit mindestens zwei Backenpaaren (8, 10 und 9, 11), die in einer Ebene vorgesehen sind und am Wabenkern auf dessen Ober- und Unterseite angreifen,
d) Knicken und Falten der Stege (13, 14) durch eine Relativbewegung der voneinander beabstandeten Ebenen parallel zur Maschinenlaufrichtung (MLR) aufeinander zu,
e) Lösen der Fixierung der Schmalseiten.

2. Verfahren zur Herstellung eines flexibel formbaren Wabenkerns nach Anspruch 1, **dadurch gekennzeichnet, dass** in Schritt a) ein Expandieren des unterexpandiert zugeführten Wabenkerns (1) erfolgt.

3. Verfahren zur Herstellung eines flexibel formbaren Wabenkerns nach einem der vorhergehenden Ansprüche, **dadurch gekennzeichnet, dass** mit Schritt b) bis einschließlich zu Schritt e) eine Führung des Wabenkerns (2) erfolgt, die eine seitliche Rückverformung (Relaxation) des Wabenkerns (2) nach dem Lösen einer Expansionszugkraft verhindert.

4. Verfahren zur Herstellung eines flexibel formbaren Wabenkerns nach einem der vorhergehenden Ansprüche, **dadurch gekennzeichnet, dass** nach Schritt e) die Fixierung der Schmalseiten gelöst wird, so dass die Stege (13, 14) des Wabenkerns (2) weitgehend in die Ausrichtung zurückkehren, die sie vor dem Überexpandieren innehatten.

5. Verfahren nach einem der vorhergehenden Ansprüche, **dadurch gekennzeichnet, dass** ein Hexagonalwabenkern als Wabenkern (1) verwendet wird.

6. Verfahren nach Anspruch 5, **dadurch gekennzeichnet, dass** das Überexpandieren des Hexagonalwabenkerns (1) soweit erfolgt, dass die Einzelstege (13) weitgehend parallel zur Maschinenlaufrichtung (MLR) und die Doppelstege (14) überwiegend quer zur Maschinenlaufrichtung (MLR) ausgerichtet sind.

7. Vorrichtung zur Durchführung des Verfahrens nach einem der vorhergehenden Ansprüche, aufweisend mindestens ein erstes und ein zweites Paar von Walzen (5 und 6), wobei die Paare von Walzen (5, 6) geeignet sind, einen Wabenkern (1) in eine Maschinenlaufrichtung (MLR) zu bewegen, indem die Walzen (5, 6) paarweise an der Ober- und Unterseite der Wabenkerne (1) angreifen, **dadurch gekennzeichnet, dass**
∘ das weiter in Maschinenlaufrichtung (MLR) gelegene zweite Paar der Walzen (6) schneller läuft als das erste Paar (5) und so die Überexpansion des Wabenkerns (1) realisiert,
∘ in Maschinenlaufrichtung (MLR) hinter dem zweiten Paar (6) von Walzen mindestens zwei Klemmvorrichtungen (8, 9), jeweils in einer Ebene , vorgesehen sind, die an den Schmalseiten der Stege (13, 14) des überexpandierten Wabenkerns angreifen und durch Klemmen der Schmalseiten der Stege (13, 14) diese fixieren,
∘ die mindestens zwei Klemmvorrichtungen (8, 9) dazu ausgelegt sind, eine Relativbewegung parallel zur Maschinenlaufrichtung (MLR) aufeinander zu auszuführen und so ein Knicken und Falten der Stege (13, 14) vorzunehmen.

8. Vorrichtung nach Anspruch 7, **dadurch gekennzeichnet, dass** die Klemmvorrichtungen (8, 9) dazu ausgelegt sind, nach dem Knicken und Falten die Fixierung der Schmalseiten der Stege (13, 14) aufzuheben und in die Ausgangsposition vor dem Fixieren der Schmalseiten der Stege (13, 14) zurückbewegt zu werden.

9. Vorrichtung nach einem der Ansprüche 7 oder 8, **dadurch gekennzeichnet, dass** als Klemmvorrichtungen Backenpaare (8, 9), jeweils in einer Ebene senkrecht zur Maschinenlaufrichtung (MLR), vorgesehen sind.

10. Vorrichtung nach Anspruch 9, **dadurch gekennzeichnet, dass** die Bewegung der Backen der Backenpaare (8, 9) zum Fixieren senkrecht zu der Ober- bzw. Unterseite des Wabenkernes (2) erfolgt.

11. Vorrichtung nach einem der Ansprüche 9 oder 10, **dadurch gekennzeichnet, dass** Walzen und gerade Backen oder Backen mit zick-zack, wellenförmigen oder schräg angeordneten Klemmelementen eingesetzt werden.

12. Vorrichtung nach einem der Ansprüche 9 bis 11, **dadurch gekennzeichnet, dass** vor dem ersten Paar der Walzen ein Expansionswalzenpaar (6) vorgesehen ist, das auf einen unterexpandierten Wabenkern (1) eine Expansionszugkraft ausübt.

13. Vorrichtung nach Anspruch 12, **dadurch gekennzeichnet, dass** die seitliche Rückverformung des Wabenkerns (2) nach dem Lösen einer Expansionszugkraft verhindert wird, indem seitliche Führungselemente (7) oder Elemente, die auf der Ober- bzw. Unterseite des Wabenkerns angreifen, vorgesehen sind.

## Claims

1. Method for producing a flexibly shapeable honeycomb core (4), comprising at least the following method steps:
a) providing an over-expandable honeycomb core (1) and supplying it to a processing device in a machine running direction (MLR),
b) over-expanding the honeycomb core (4) in the machine running direction by stretching the honeycomb core 4 in such a way that some of the webs (13, 14) are oriented further in the machine running direction from the position they assume in the expanded state,
c) fixing the narrow sides of the webs (13, 14) of the over-expanded honeycomb core (2), in at least two planes which are spaced apart from one another in the machine running direction (MLR) and extend perpendicularly to the machine running direction, by clamping the honeycomb core (1) by means of at least two pairs of jaws (8, 10 and 9, 11) which are provided in one plane and engage on the honeycomb core on its top and bottom sides,
d) bending and folding the webs (13, 14) by a relative movement of the spaced-apart planes towards one another in parallel with the machine running direction (MLR),
e) releasing the fixing of the narrow sides.

2. Method for producing a flexibly shapeable honeycomb core according to claim 1, **characterised in that** in step a), the honeycomb core (1) supplied in an under-expanded form is expanded.

3. Method for producing a flexibly shapeable honeycomb core according to either of the preceding claims, **characterised in that,** by means of step b) up to and including step e), a guidance of the honeycomb core (2) takes place which prevents a lateral re-deformation (relaxation) of the honeycomb core (2) after the release of an expansion tensile force.

4. Method for producing a flexibly shapeable honeycomb core according to any of the preceding claims, **characterised in that** after step e), the fixing of the narrow sides is released so that the webs (13, 14) of the honeycomb core (2) largely return to the orientation they had before the over-expansion.

5. Method according to any of the preceding claims, **characterised in that** a hexagonal honeycomb core is used as the honeycomb core (1).

6. Method according to claim 5, **characterised in that** the over-expansion of the hexagonal honeycomb core (1) takes place to such an extent that the individual webs (13) are oriented largely in parallel with the machine running direction (MLR) and the double webs (14) are oriented predominantly transversely to the machine running direction (MLR).

7. Device for carrying out the method according to any of the preceding claims, having at least a first and a second pair of rollers (5 and 6), the pairs of rollers (5, 6) being suitable for moving a honeycomb core (1) in a machine running direction (MLR) by the rollers (5, 6) acting in pairs on the top and bottom sides of the honeycomb cores (1), **characterised in that**
∘ the second pair of rollers (6) located further in the machine running direction (MLR) runs faster than the first pair (5) and thus implements the over-expansion of the honeycomb core (1),
∘ in the machine running direction (MLR) downstream of the second pair (6) of rollers, at least two clamping devices (8, 9) are provided, each in one plane, which engage on the narrow sides of the webs (13, 14) of the over-expanded honeycomb core and fix them by clamping the narrow sides of the webs (13, 14),
∘ the at least two clamping devices (8, 9) are designed to carry out a relative movement towards one another in parallel with the machine running direction (MLR), and thus to bend and fold the webs (13, 14).

8. Device according to claim 7, **characterised in that** the clamping devices (8, 9) are designed to release the fixing of the narrow sides of the webs (13, 14) after the bending and folding, and to be moved back into the starting position before the fixing of the narrow sides of the webs (13, 14).

9. Device according to either claim 7 or claim 8, **characterised in that** pairs of jaws (8, 9) are provided as clamping devices, each in a plane perpendicular to the machine running direction (MLR).

10. Device according to claim 9, **characterised in that** the movement of the jaws of the jaw pairs (8, 9) for fixing takes place perpendicularly to the top or bottom side of the honeycomb core (2).

11. Device according to either claim 9 or claim 10, **characterised in that** rollers and straight jaws or jaws having zigzag, wave-shaped or obliquely arranged clamping elements are used.

12. Device according to any of claims 9 to 11, **characterised in that** a pair of expansion rollers (6) is provided upstream of the first pair of rollers, which pair of expansion rollers exerts an expansion tensile force on an under-expanded honeycomb core (1).

13. Device according to claim 12, **characterised in that** the lateral re-deformation of the honeycomb core (2) after the release of an expansion tensile force is prevented by providing lateral guide elements (7) or elements which engage on the top or bottom side of the honeycomb core.

## Revendications

1. Procédé pour la fabrication d'un noyau en nid d'abeille (4) pouvant être formé de manière flexible, comprenant au moins les étapes de procédé suivantes :
a) fourniture d'un noyau en nid d'abeille (1) pouvant être surexpansé et amenée à un dispositif de traitement dans un sens de marche de machine (MLR),
b) surexpansion du noyau en nid d'abeille (4) dans le sens de marche de machine en étirant le noyau en nid d'abeille (4), de telle sorte qu'une partie des parois (13, 14) sont orientées plus loin dans le MLR à partir de la position qu'elles occupent à l'état expansé,
c) fixation des côtés étroits des parois (13, 14) du noyau en nid d'abeille (2) surexpansé, dans au moins deux plans espacés l'un de l'autre dans le sens de marche de machine (MLR), lesquels plans s'étendent perpendiculairement au MLR, au moyen du serrage du noyau en nid d'abeille (1) avec au moins deux paires de mâchoires (8, 10 et 9, 11) qui sont prévues dans un plan et qui viennent en prise avec le noyau en nid d'abeille sur sa face supérieure et sa face inférieure,
d) flambage et pliage des parois (13, 14) les unes sur les autres par un mouvement relatif des plans espacés l'un de l'autre parallèlement au sens de marche de machine (MLR),
e) relâchement de la fixation des côtés étroits.

2. Procédé pour la fabrication d'un noyau en nid d'abeille pouvant être formé de manière flexible selon la revendication 1, **caractérisé en ce qu'à** l'étape a), une expansion du noyau en nid d'abeille (1) amené sous-expansé est effectuée.

3. Procédé pour la fabrication d'un noyau en nid d'abeille pouvant être formé de manière flexible selon l'une des revendications précédentes, **caractérisé en ce qu'**avec l'étape b) jusqu'à l'étape e) incluse, un guidage du noyau en nid d'abeille (2) est effectué, lequel guidage empêche un redressement latéral (relaxation) du noyau en nid d'abeille (2) après le relâchement d'une force de traction d'expansion.

4. Procédé pour la fabrication d'un noyau en nid d'abeille pouvant être formé de manière flexible selon l'une des revendications précédentes,
**caractérisé en ce qu'**après l'étape e), la fixation des côtés étroits est relâchée, de sorte que les parois (13, 14) du noyau en nid d'abeille (2) reviennent largement dans l'orientation qu'elles avaient avant la surexpansion.

5. Procédé selon l'une des revendications précédentes,
**caractérisé en ce qu'**un noyau en nid d'abeille hexagonal est utilisé comme noyau en nid d'abeille (1).

6. Procédé selon la revendication 5, **caractérisé en ce que** la surexpansion du noyau en nid d'abeille (1) hexagonal est effectuée jusqu'à ce que les parois simples (13) soient orientées largement parallèlement au sens de marche de machine (MLR) et les parois doubles (14) soient orientées en grande partie transversalement au sens de marche de machine (MLR).

7. Dispositif pour la mise en oeuvre du procédé selon l'une des revendications précédentes, présentant au moins une première et une seconde paires de rouleaux (5 et 6), dans lequel les paires de rouleaux (5, 6) sont adaptées pour déplacer un noyau en nid d'abeille (1) dans un sens de marche de machine (MLR) par le fait que les rouleaux (5, 6) viennent en prise par paires avec les faces supérieure et inférieure des noyaux en nid d'abeille (1), **caractérisé en ce que**
∘ la seconde paire de rouleaux (6) située plus loin dans le sens de marche de machine (MLR) tourne plus vite que la première paire (5) et réalise ainsi la surexpansion du noyau en nid d'abeille (1),
∘ au moins deux dispositifs de serrage (8, 9), respectivement dans un plan, sont prévus en aval de la seconde paire (6) de rouleaux dans le sens de marche de machine (MLR), lesquels dispositifs de serrage viennent en prise avec les côtés étroits des parois (13, 14) du noyau en nid d'abeille surexpansé et fixent celles-ci en serrant les côtés étroits des parois (13, 14),
∘ les au moins deux dispositifs de serrage (8, 9) sont conçus pour exécuter un mouvement relatif parallèlement au sens de marche de machine (MLR) l'un vers l'autre et ainsi réaliser un flambage et un pliage des parois (13, 14).

8. Dispositif selon la revendication 7, **caractérisé en ce que** les dispositifs de serrage (8, 9) sont conçus pour supprimer la fixation des côtés étroits des parois (13, 14) après le flambage et le pliage et pour être ramenés dans la position initiale avant la fixation des côtés étroits des parois (13, 14).

9. Dispositif selon l'une des revendications 7 ou 8, **caractérisé en ce que** des paires de mâchoires (8, 9) sont prévues comme dispositifs de serrage, respectivement dans un plan perpendiculaire au sens de marche de machine (MLR).

10. Dispositif selon la revendication 9, **caractérisé en ce que** le mouvement des mâchoires des paires de mâchoires (8, 9) pour la fixation est effectué perpendiculairement à la face supérieure ou inférieure du noyau en nid d'abeille (2).

11. Dispositif selon l'une des revendications 9 ou 10, **caractérisé en ce que** des rouleaux et des mâchoires droites ou des mâchoires comportant des éléments de serrage en zigzag, ondulés ou inclinés sont utilisés.

12. Dispositif selon l'une des revendications 9 à 11, **caractérisé en ce qu'**une paire de rouleaux d'expansion (6), laquelle exerce une force de traction d'expansion sur un noyau en nid d'abeille (1) sous-expansé, est prévue en amont de la première paire de rouleaux.

13. Dispositif selon la revendication 12, **caractérisé en ce que** le redressement latéral du noyau en nid d'abeille (2) après le relâchement d'une force de traction d'expansion est empêché par le fait que des éléments de guidage latéraux (7) ou des éléments qui viennent en prise avec la face supérieure ou inférieure du noyau en nid d'abeille sont prévus.
